# EUROPEAN PATENT SPECIFICATION

(11) **EP 4 276 685 B1**
(45) Date of publication and mention of the grant of the patent: **09.12.2026**
(21) Application number: 22745213.3
(22) Date of filing: 25.01.2022
(51) Int. Cl.: G06K 17/00, H04W 4/021, G01S 13/87, H04W 4/80

(54) **TAG POSITIONING METHOD AND RELATED DEVICE**
ETIKETTENPOSITIONIERUNGSVERFAHREN UND ZUGEHÖRIGE VORRICHTUNG
PROCÉDÉ DE POSITIONNEMENT D'ÉTIQUETTE ET DISPOSITIF ASSOCIÉ

(30) Priority: 31.01.2021 CN 202110132083
(43) Date of publication of application: 15.11.2023
(73) Proprietor: Huawei Technologies Co., Ltd., Shenzhen, Guangdong 518129 (CN)
(72) Inventor: FENG, Xibao, Shenzhen, Guangdong 518129 (CN); WU, Yiling, Shenzhen, Guangdong 518129 (CN); LU, Zhenwei, Shenzhen, Guangdong 518129 (CN); LI, Chenwan, Shenzhen, Guangdong 518129 (CN)
(74) Representative: Gill Jennings & Every LLP
(86) International application number: PCT/CN2022/073684
(87) International publication number: WO 2022/161338

(56) References cited:
- EP-A1- 3 472 636
- EP-B1- 3 472 636
- CN-A- 106 485 291
- CN-A- 108 487 923
- CN-A- 109 827 561
- US-A1- 2002 163 424
- US-A1- 2007 222 679
- US-A1- 2009 307 529
- "Information technology -- Radio frequency identification for item management -- Part 6: Parameters for air interface communications at 860 MHz to 960 MHz", 24 November 2010 (2010-11-24), pages 1 - 446, XP082048104, Retrieved from the Internet <URL:https://api.iec.ch/harmonized/publications/download/113360> [retrieved on 20101124]

## Description

### TECHNICAL FIELD

This application relates to the communication field, and in particular, to RFID tag positioning methods.

### BACKGROUND

The radio frequency identification (radio frequency identification, RFID) technology is a contactless automatic identification technology. A reader/writer (interrogator) charges a tag by sending an excitation signal to the tag (tag). The tag receives signaling sent by the target reader/writer, and the tag sends the signaling to the target reader/writer through a reflected signal. In this way, the target reader/writer may identify an ID of the tag, and perform operations such as reading and writing on the tag.

The tag is widely used in positioning scenarios. After the tag receives an identity included in information sent by the reader/writer, the tag sends the identity to a positioning device such as a server through a communication network. The positioning device incorporates the tag into a range covered by the reader/writer based on a pre-stored location of the reader/writer.

In a conventional communication process, a reader/writer sends RFID signaling to a tag to locate the tag. Protocol signaling sent between the reader/writer and the tag includes less information content, and efficiency of tag positioning is low. EP 3 472636 A1 discloses methods for determining the location of objects using signal phase shifts. US20070222679A1 discloses systems that determine object positions by using directional broadcast signals and phase shifts. ISO/IEC 18000-6:2010 discloses technical specifications for RFID systems, including memory use for optional tag functions. US20020163424A1 discloses a contactless communication system using transponders with station identification signals.

### SUMMARY

This application provides a tag positioning method. In this method, a target reader/writer may determine, based on an identity (identity, ID) that is of a first transmitter and that is included in signaling sent by a target tag, a coverage area that is of a transmitter and in which the target tag is located, to more accurately determine a location of the tag. Therefore, efficiency of tag positioning is improved. The invention is defined by the independent claims. Advantageous examples are set out in the dependent claims.

A first aspect of this application provides a radio frequency identification, RFID, tag positioning method as defined in appended claim 1.

In this application, the target tag receives the first signaling sent by the target reader/writer, where the first signaling includes the identity ID of the first transmitter. The target tag sends the second signaling to the target reader/writer, where the second signaling includes the ID of the first transmitter. Further, the target reader/writer may determine, based on the ID that is of the first transmitter and that is included in the signaling sent by the target tag, a coverage area that is of a transmitter and in which the target tag is located, to more accurately determine a location of the tag. Therefore, efficiency of tag positioning is improved.

In a possible implementation of the first aspect, the first signaling includes inventory signaling, and the inventory signaling includes selection signaling (Select), query signaling (Query), acknowledgment signaling (acknowledge, ACK), negative acknowledgment signaling (negative acknowledge, NAK) and/or query signaling (Queryrep).

In this possible implementation, the target reader/writer uses a transmit/receive separation architecture. After being separated, the target reader/writer includes at least the first transmitter and the first receiver. Optionally, the target reader/writer may further include more transmitters such as a second transmitter. This is not specifically limited herein. The target reader/writer sends the first signaling to the target tag. Optionally, the first signaling may be the inventory signaling, and the inventory signaling refers to signaling in an inventory process. Specifically, the inventory signaling may be the selection signaling Select, the query signaling Query, the acknowledgment signaling ACK, the negative acknowledgment signaling NAK, and/or the query signaling Queryrep. This is not specifically limited herein. A plurality of types of inventory signaling include the identity of the first transmitter, the target tag may send the identity of the first transmitter to the target reader/writer, and the identity of the first transmitter may be used to locate the target tag. This improves accuracy of locating the tag by the target reader/writer.

In a possible implementation of the first aspect, the second signaling includes the inventory signaling, and the inventory signaling includes reply signaling Reply and/or electronic product code (electronic product code, EPC).

In this possible implementation, the target tag may send the identity of the first transmitter to the target reader/writer through the reply signaling Reply and/or the electronic product code. After receiving the identity of the first transmitter, the target reader/writer may locate the target tag by using the identity. This improves accuracy of tag positioning by the target reader/writer.

In a possible implementation of the first aspect, the method further includes: The target tag receives third signaling sent by the target reader/writer, where the third signaling indicates the target tag to send the second signaling to the target reader/writer.

In this possible implementation, the tag does not carry an identity of a transmitter in the inventory signaling. After the inventory process ends, the target reader/writer sends an instruction to the target tag through the third signaling, where the third signaling is dedicated signaling that indicates the target tag to send the identity of the first transmitter to the target reader/writer. For example, when a transmitter ID enable bit carried by the reader/writer in the inventory signaling is disabled, the inventory signaling sent by the tag to the reader/writer does not include the identity of the transmitter. Therefore, the reader/writer may enable, through the dedicated signaling after inventory, the tag to send, to the reader/writer, an identity of a transmitter of the reader/writer. This possible implementation provides an implementation in which the target tag sends the identity of the first transmitter to the target reader/writer, and improves flexibility of the solution.

In a possible implementation of the first aspect, the target reader/writer includes a second transmitter, and the method further includes: The target tag determines that a reporting condition is met; and the target tag sends fourth signaling to the target reader/writer, where the fourth signaling includes an identity of the second transmitter.

If the target tag determines that the reporting condition is met, the target tag sends the fourth signaling to the target reader/writer.

In this possible implementation, optionally, the reporting condition of the tag may be sent by the reader/writer, or the reporting condition of the tag may be obtained in another manner. This is not specifically limited herein. Optionally, the reporting condition may be that the tag switches a transmitter, the reporting condition may be that preset reporting time of the tag is reached, or the reporting condition may be another condition. This is not specifically limited herein.

### (1) The tag switches a transmitter.

In this embodiment, the target reader/writer includes the first transmitter and the second transmitter, and the first transmitter and the second transmitter are not a same network device. The target tag communicates with the target reader/writer through the first transmitter. After the target tag moves, and it is assumed that the target tag goes beyond a coverage area of the first transmitter and enters a coverage area of the second transmitter, the target tag switches a transmitter and communicates with the target reader/writer through the second transmitter. Alternatively, coverage areas of the first transmitter and the second transmitter overlap, and the target tag switches from the first transmitter to the second transmitter. In this case, an identity that is of a transmitter and that is included in signaling sent by the target reader/writer and that is received by the target tag again is the identity of the second transmitter, and the target tag confirms that the received identity of the transmitter is switched from the identity of the first transmitter to the identity of the second transmitter. That is, the received identity of the transmitter changes. In this case, the target tag determines that the reporting condition is met, and the target tag may send the identity of the second transmitter to the target reader/writer through the fourth signaling. Optionally, the fourth signaling may be signaling included in the inventory signaling (such as Select, Query, Reply, ACK, NAK, EPC, Queryrep, and/or Queryadjust). Signaling included in the fourth signaling may also be signaling other than the inventory signaling. This is not specifically limited herein.

### (2) The preset reporting time of the tag reaches.

In this application, the first transmitter and the second transmitter are a same network device. After determining that the preset reporting time reaches, the target tag reports the identity of the second transmitter (the identity of the first transmitter) to a receiver of the reader/writer through the fourth signaling. Optionally, the preset reporting time may be obtained by skilled persons by configuring for the target tag through the target tag, and the preset reporting time may be sent by a receiver to the target tag through the inventory signaling or other signaling. The preset reporting time may also be obtained in another manner. The reader/writer may specify, through the first signaling, the target tag to report the identity of the first transmitter in specific signaling. This is not specifically limited herein.

In this application, optionally, the first signaling may further include reporting time of the identity of the first transmitter.

Optionally, the target reader/writer sends the reporting time of the identity of the first transmitter to the target tag through the first signaling. The reporting time may specify that the target tag sends the identity of the first transmitter to the target reader/writer at a specific moment, and the reporting time may specify that the target tag sends the identity of the first transmitter to the target reader/writer after a time period. For example, it is assumed that inventory signaling Select includes the reporting time, and the reporting time indicate the tag to carry an identity of a transmitter at a moment of sending EPC. The reader/writer sends Select that carries the reporting time to the tag, and after the tag receives Select, the tag carries the identity of the transmitter when sending the EPC. The reporting time may alternatively be that the target tag sends the identity of the first transmitter to the target reader/writer after receiving the third signaling mentioned in the foregoing embodiment. This is not specifically limited herein.

In this possible implementation, the target reader/writer may configure, in a plurality of manners, the target tag to report the identity at different time. This improves flexibility of the solution.

In a possible implementation of the first aspect, the first signaling includes a quantity of reporting times of the identity of the first transmitter.

### (1) Report for one time or report in all signaling

For example, it is assumed that the quantity that is of reporting times and that is included in the first signaling indicates that the identity of the first transmitter is reported for one time. The reader/writer may specify, through the first signaling, the target tag to report the identity of the first transmitter in specific signaling. After the identity of the first transmitter is reported to the target reader/writer in the specific signaling, the identity of the first transmitter is no longer reported to the target reader/writer in other signaling than the specific signaling. It is assumed that the quantity that is of reporting times and that is included in the first signaling indicates to report the identity of the first transmitter in all signaling. The reader/writer may specify, through the first signaling, the target tag to report the identity of the first transmitter in all signaling that is sent to the reader/writer. The signaling mentioned in this embodiment may be signaling included in the inventory signaling, or may be signaling other than the inventory signaling. This is not specifically limited herein. In this application, signaling that is received by the target tag earlier than the first signaling may carry an identity of a transmitter used last time, or may carry an invalid identity. This is not specifically limited herein.

### (2) Random reporting

For example, in this application, it is assumed that the quantity that is of reporting times and that is included in the first signaling indicates random reporting, the identity that is of the first transmitter and that is sent by the target tag to the reader/writer may be included in any piece of signaling, and the target reader/writer may identify, in a plurality of manners, the signaling that carries the identity of the first transmitter. In this possible manner, the target reader/writer may configure, in a plurality of manners, the target tag to report the identity in different manners. This improves implementability of the solution.

In a possible implementation of the first aspect, the identity of the first transmitter is transmitted in plaintext, or the identity of the first transmitter is transmitted in encrypted transmission.

In this possible implementation, optionally, the identity of the first transmitter may be sent to the target reader/writer in a plaintext transmission manner. Optionally, the identity of the first transmitter is transmitted to the target reader/writer in an encrypted transmission manner. For example, the target tag may encrypt the identity of the first transmitter and an RN 16 in an exclusive OR manner, and then send the encrypted identity to the target reader/writer. Alternatively, the target tag may encrypt the identity of the first transmitter in another manner, and send the encrypted identity to the target reader/writer. This is not specifically limited. In this possible implementation, two specific sending forms are provided, and implementability of the solution is improved.

A second aspect of this application provides a radio frequency identification, RFID, tag positioning method as defined in appended claim 7.

In this application, the target reader/writer sends the first signaling to the target tag, where the first signaling includes the identity ID of the first transmitter. The target reader/writer receives the second signaling sent by the target tag, where the second signaling includes the ID of the first transmitter. Further, the target reader/writer may determine, based on the ID that is of the first transmitter and that is included in the signaling sent by the target tag, a coverage area that is of a transmitter and in which the target tag is located, to more accurately determine a location of the tag. Therefore, efficiency of tag positioning is improved.

In a possible implementation of the second aspect, the first signaling includes inventory signaling, and the inventory signaling includes selection signaling Select, query signaling Query, acknowledgment signaling ACK, negative acknowledgment signaling NAK, and/or query signaling Queryrep.

In this possible implementation, the target reader/writer uses a transmit/receive separation architecture. After being separated, the target reader/writer includes at least the first transmitter and the first receiver. Optionally, the target reader/writer may further include more transmitters such as a second transmitter. This is not specifically limited herein. The target reader/writer sends the first signaling to the target tag. Optionally, the first signaling may be the inventory signaling, and the inventory signaling refers to signaling in an inventory process. Specifically, the inventory signaling may be the selection signaling Select, the query signaling Query, the acknowledgment signaling ACK, the negative acknowledgment signaling NAK, and/or the query signaling Queryrep. This is not specifically limited herein. A plurality of types of inventory signaling include the identity of the first transmitter, the target tag may send the identity of the first transmitter to the target reader/writer, and the identity of the first transmitter may be used to locate the target tag. This improves accuracy of locating the tag by the target reader/writer.

In a possible implementation of the second aspect, the second signaling includes the inventory signaling, and the inventory signaling includes reply signaling Reply and/or electronic product code EPC.

In this possible implementation, the target tag may send the identity of the first transmitter to the target reader/writer through the reply signaling Reply and/or the electronic product code EPC. After receiving the identity of the first transmitter, the target reader/writer may locate the target tag by using the identity. This improves accuracy of tag positioning by the target reader/writer.

In a possible implementation of the second aspect, the method further includes: The target reader/writer sends third signaling to the target tag, where the third signaling indicates the target tag to send the second signaling to the target reader/writer.

In this possible implementation, the tag does not carry an identity of a transmitter in the inventory signaling. After the inventory process ends, the target reader/writer sends an instruction to the target tag through the third signaling, where the third signaling is dedicated signaling that indicates the target tag to send the identity of the first transmitter to the target reader/writer. For example, when a transmitter ID enable bit carried by the reader/writer in the inventory signaling is disabled, the inventory signaling sent by the tag to the reader/writer does not include the identity of the transmitter. Therefore, the reader/writer may enable, through the dedicated signaling after inventory, the tag to send, to the reader/writer, an identity of a transmitter of the reader/writer. This possible implementation provides an implementation in which the target tag sends the identity of the first transmitter to the target reader/writer, and improves flexibility of the solution.

In a possible implementation of the second aspect, the target reader/writer includes a third transmitter, and the method further includes: The target reader/writer obtains first configuration information through the first receiver, where the first configuration information indicates a location of the third transmitter and/or a deployment relationship between a plurality of third transmitters.

In this possible implementation, the first configuration information may indicate the location of the third transmitter and/or the deployment relationship between the plurality of third transmitters. The third transmitter refers to a transmitter in a subset of all transmitters that communicate with the first receiver. Optionally, the first receiver may obtain the first configuration information through a network device such as a database or a server that stores a topological relationship. Alternatively, the first receiver may receive the first configuration information sent by one or more third transmitters. Alternatively, the first receiver may obtain the first configuration information in another manner. This is not specifically limited herein. In this possible implementation, the target reader/writer may learn of a location of each transmitter based on the first configuration information, and further determine a location of the tag based on the location of the transmitter and the identity of the transmitter. This improves implementability of the solution.

In a possible implementation of the second aspect, the method further includes: The target reader/writer sends second configuration information to the transmitter through the receiver, where the second configuration information indicates a configuration required for communication between the target tag and the target reader/writer.

In this possible implementation, the second configuration information indicates the configuration required for communication between the target tag and the target reader/writer. It is assumed that the tag communicates with the reader/writer through a transmitter A. If the tag moves, after the reader/writer predicts a moving track of the tag, the reader/writer may infer that the tag communicates with the reader/writer through a transmitter B at a next moment. The reader/writer may send the second configuration information to the transmitter B. For example, the reader/writer may add a mask (the second configuration information) to the selection signaling Select sent to the transmitter B, to accelerate an inventory speed of the tag by the reader/writer and improve inventory efficiency.

According to the foregoing technical solutions, it can be learned that embodiments of this application have the following advantages.

In this application, the target tag receives the first signaling sent by the target reader/writer, where the first signaling includes the identity ID of the first transmitter. The target tag sends the second signaling to the target reader/writer, where the second signaling includes the ID of the first transmitter. Further, the target reader/writer may determine, based on the ID that is of the first transmitter and that is included in the signaling sent by the target tag, a coverage area that is of a transmitter and in which the target tag is located, to more accurately determine a location of the tag. Therefore, efficiency of tag positioning is improved.

### BRIEF DESCRIPTION OF DRAWINGS

FIG. 1 is a schematic diagram of an embodiment of a tag and a reader/writer according to this application;
FIG. 2 is a schematic diagram of an embodiment of an inventory process according to this application;
FIG. 3 is a schematic diagram of another embodiment of an inventory process of a tag according to this application;
FIG. 4 is a schematic diagram of an embodiment of a tag positioning system according to this application;
FIG. 5 is a schematic diagram of an embodiment of a tag positioning method according to this application;
FIG. 6 is a schematic diagram of another embodiment of a tag positioning method according to this application;
FIG. 7 is a schematic diagram of another embodiment of a tag positioning method according to this application;
FIG. 8 is a schematic diagram of another embodiment of a tag positioning method according to this application;
FIG. 9 is a schematic diagram of another embodiment of a tag positioning method according to this application;
FIG. 10 is a schematic diagram of another embodiment of a tag positioning method according to this application;
FIG. 11a is a schematic diagram of another embodiment of a tag positioning method according to this application;
FIG. 11b is a schematic diagram of another embodiment of a tag positioning method according to this application;
FIG. 12 is a schematic diagram of a structure of a tag device according to this application;
FIG. 13 is a schematic diagram of a structure of a reader/writer according to this application; and
FIG. 14 is a schematic diagram of a structure of a network device according to this application.

### DESCRIPTION OF EMBODIMENTS

The following describes examples provided in this application with reference to the accompanying drawings. It is clear that the described examples are merely some rather than all examples in this application. Persons of ordinary skill in the art may know that, with development of technologies and emergence of a new scenario, the technical solutions provided in this application are also applicable to similar technical problems.

In the specification, claims, and accompanying drawings of this application, the terms "first", "second", and the like are intended to distinguish between similar objects but do not necessarily indicate a specific order or sequence. It should be understood that the data termed in such a way is interchangeable in proper circumstances so that examples described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

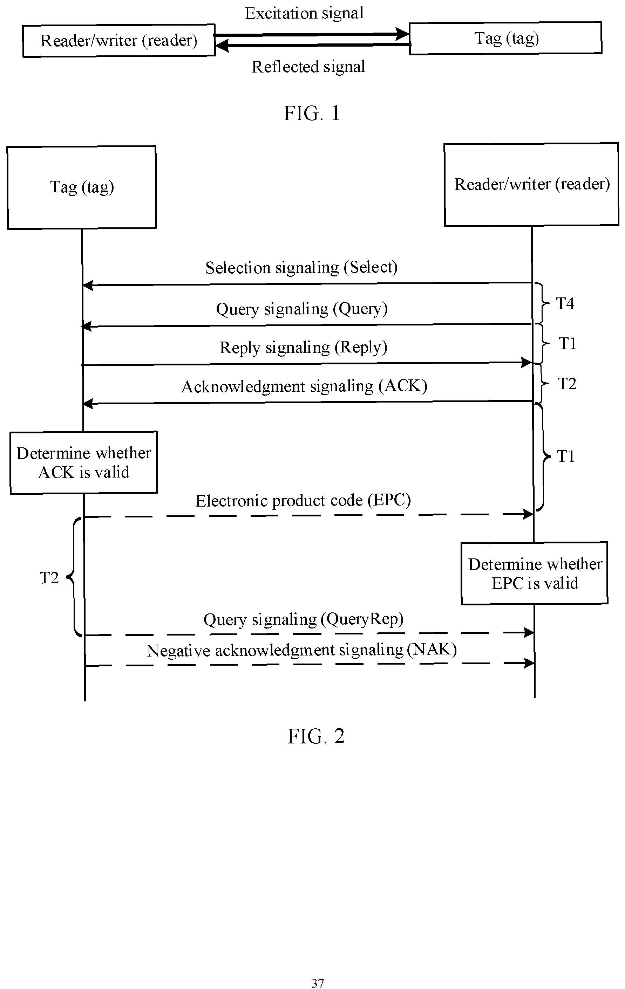

FIG. 1 is a schematic diagram of an embodiment of a tag and a reader/writer according to this application.

Refer to FIG. 1. As shown in FIG. 1, an RFID technology is a contactless automatic identification technology. The reader/writer charges the tag by sending an excitation signal to the low-cost tag, the tag receives signaling sent by the reader/writer, and the tag sends the signaling to the reader/writer through a reflected signal. In this way, the reader/writer can identify an ID of the tag, and the reader/writer can perform a read/write operation on the tag. The reader/writer may further perform other operations on the tag. This is not specifically limited herein.

The tag is widely used in positioning scenarios. After the tag receives an identity included in information sent by the reader/writer, the tag sends the identity to a positioning device such as a server through a communication network. The positioning device incorporates the tag into a range covered by the reader/writer based on a pre-stored location of the reader/writer.

In a conventional communication process, a reader/writer sends RFID signaling to a tag to locate the tag. In a case in which one receiver is corresponding to a plurality of transmitters, the receiver cannot determine a coverage area of which transmitter and in which the tag is located, and the receiver obtains positioning information of the tag through signal quality. As a result, positioning precision is not sufficiently precise, and positioning efficiency is low.

To resolve a problem in the foregoing solution, this application provides a tag positioning method. In this application, a target tag receives first signaling sent by a target reader/writer, where the first signaling includes an identity of a first transmitter. The target tag sends second signaling to the target reader/writer, where the second signaling includes the identity of the first transmitter. Further, the target reader/writer may determine, based on the identity that is of the first transmitter and that is included in the second signaling sent by the target tag, a coverage area that is of a transmitter and in which the target tag is located, to more accurately determine a location of the tag. Therefore, efficiency of tag positioning is improved.

FIG. 2 is a schematic diagram of an embodiment of an inventory process according to this application.

Refer to FIG. 2. The following briefly describes an inventory process of a tag in FIG. 2.

A reader/writer sends selection signaling (Select) to the tag, where Select is used to select a subset of the tag, and the subset of the tag includes a plurality of tags. In addition, Select may be used to modify an inventory flag bit of a session (session).

The reader/writer sends query signaling (Query) to the tag, where Query is used to select a session from a plurality of sessions and select a tag that matches an inventory flag bit in the session. Further, an inventory process of a tag that is in the subset and that is selected by Select is initialized, and each tag that is in the subset and that is selected by the selection signaling Select selects a random number to initialize a counter (counter).

The tag sends reply signaling (Reply) to the reader/writer, and an RN 16 included in Reply indicates a temporary identity of the tag. After the tag receives query signaling, if the tag confirms that counter = 0, the tag selects a 16-bit random number as the RN 16, and the RN 16 is fed back to the reader/writer. If the reader/writer detects that the tag feeds back the RN 16, it indicates that the inventory process is normal, and the reader/writer performs a subsequent step.

The reader/writer sends acknowledgment signaling ACK to the tag, where ACK indicates that the reader/writer successfully receives the RN 16 sent by the tag, and ACK includes the 16-bit random number that is fed back by the tag and that is used by the tag to check whether ACK is correct.

If the tag confirms that the 16-bit random number included in ACK is the same as the RN 16 sent by the tag, the tag sends electronic product code to the reader/writer, where the EPC indicates an actual ID of the tag.

If the reader/writer confirms that the EPC sent by the tag is valid, the reader/writer sends query signaling (QueryRep or QueryAdjust) to the tag. When the reader/writer receives counter-1 of all tags that receive the query signaling, or the reader/writer reselects a random number to initialize the counter based on Query Adjust, the inventory process ends.

If the reader/writer confirms that the EPC sent by the tag is invalid, the reader/writer sends negative acknowledgment (negative acknowledge, NAK) signaling to the tag.

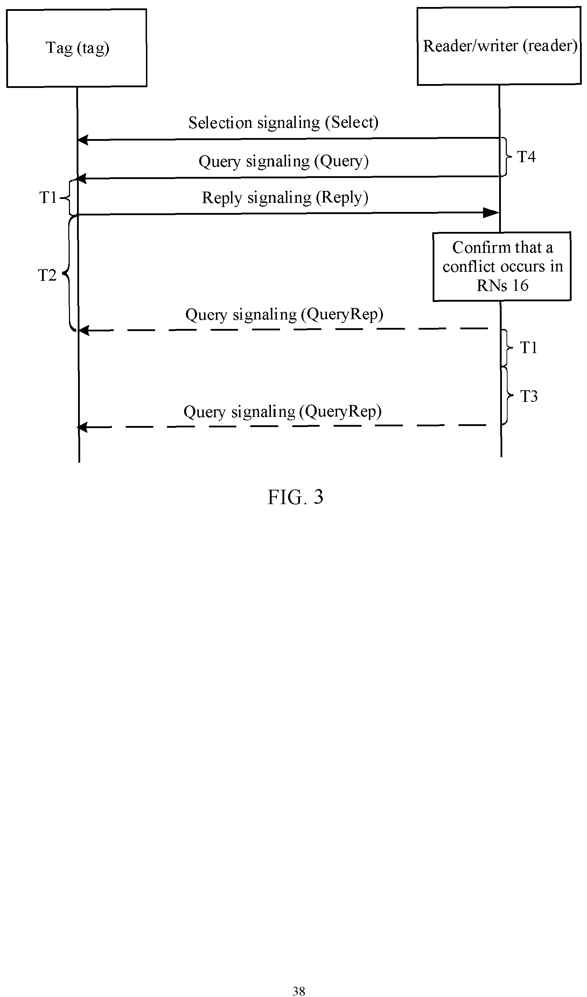

FIG. 3 is a schematic diagram of another embodiment of an inventory process of a tag according to this application.

Refer to FIG. 3. The following briefly describes the inventory process in FIG. 3.

In this application, functions of sending, by a reader/writer, Select and Query to the tag, and sending, by the tag, Reply to the reader/writer are similar to functions in the embodiment shown in FIG. 2. Details are not described herein again.

When a plurality of tags all send an RN 16 to the reader/writer, if the reader/writer determines that a conflict occurs between RNs 16 sent by the plurality of tags, the reader/writer does not send ACK to the tag, but directly sends QueryRep, skips these conflicting tags, and directly performs a subsequent inventory process. In addition, if the reader/writer does not detect that the tag feeds back an RN 16, the reader/writer also directly performs a subsequent inventory process (for example, sending QueryRep).

The following briefly describes time intervals in embodiments shown in FIG. 2 and FIG. 3.

In this application, T1 is a time interval between time at which the reader/writer completes sending of signaling and time at which the tag starts to send signaling, and the tag should meet a time sequence requirement during processing. T4 is a time interval between time at which the reader/writer completes sending of one piece of signaling and time at which the reader/writer starts to send a next piece of signaling (there is no feedback from the tag during T4, that is, there is no uplink signaling during T4). T3 is an extra delay that the reader/writer needs to wait for when there is no tag feedback when the reader/writer executes the inventory process. T2 is a time interval between time at which the tag completes sending of signaling and time at which the reader/writer starts to send signaling.

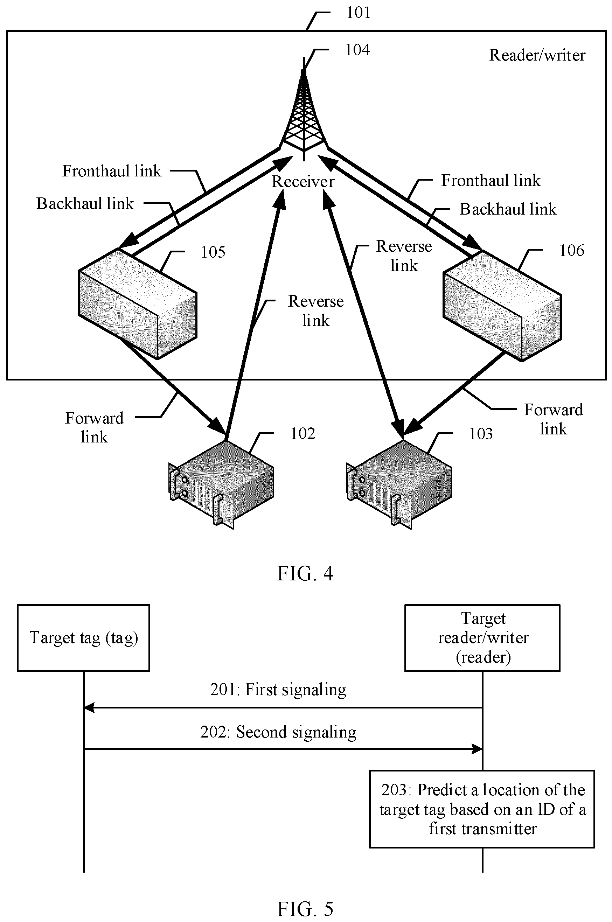

FIG. 4 is a schematic diagram of an embodiment of a tag positioning system according to this application.

Refer to FIG. 4. As shown in FIG. 4, the tag positioning system provided in this application may include a reader/writer 101, a tag 102, and a tag 103. In a separation architecture, the reader/writer 101 included in the tag positioning system provided in this application may be separated into a receiver (receiver) 104, a transmitter (helper) 105, and a transmitter 106.

In this application, a link between an air interface of a target reader/writer and an air interface of a target tag is referred to as a forward link, and a link from the tag to the reader/writer is referred to as a reverse link.

In this application, the transmitter may send, on the forward link, an excitation signal to the tag, and the receiver may receive, on the reverse link, a reflected signal sent by the tag. In addition, after generating RFID signaling, the receiver sends the RFID signaling to the transmitter through the forward downlink, and the transmitter forwards, on the forward link, the RFID signaling to the tag.

In this application, optionally, signaling may be transmitted on a forward link between the transmitter and the receiver by using a fifth generation new radio (5th-Generation New Radio, 5G NR) technology, signaling may be transmitted between the transmitter and the receiver by using a fifth generation sidelink (5G sidelink) technology, and signaling may be transmitted between the transmitter and the receiver by using another technology. This is not specifically limited herein.

In this application, according to an energy supply mode, tags may be classified into a passive tag, an active tag, and a semi-active tag. The active tag (active tag) may be referred to as an active electronic tag, or also referred to as an active tag, and uses an in-card battery to provide partial or full energy for a microchip, but does not provide energy for data transmission between the tag and the reader/writer. An advantage of the active tag is that a recognition distance is long (up to ten meters), but a disadvantage of the active tag is that a service life is limited (three to ten years) and a price is high. An active reader/writer can monitor all active tags within 100 meters.

In this application, a battery in the semi-passive tag (semi-passive tag) supplies power only to a tag circuit that consumes little power, where the tag circuit in the tag needs power supply to maintain data, and a chip in the tag needs auxiliary support of a voltage to operate. The tag is in a sleep state before entering a working state. In the sleep state, the tag is equivalent to the passive tag, and a battery inside the tag consumes little energy. Therefore, the battery can last for several years, or even for 10 years. When the tag enters a reading area of the reader/writer, the tag is excited by a radio frequency signal sent by the reader/writer. When the tag enters the working state, energy of information exchange between the tag and the reader/writer is mainly supported by the radio frequency energy supplied by the reader/writer (reflection modulation mode). A function of an internal battery of the tag is to compensate for insufficient radio frequency field strength at a location of the tag, and energy of the internal battery of the tag is not converted into radio frequency energy.

The passive tag does not include a battery and does not have a built-in battery. When an electronic tag is outside a reading range of the reader/writer, the electronic tag is in a passive state. When the electronic tag is within the reading range of the reader/writer, the electronic tag extracts, from radio frequency energy emitted by the reader/writer, a power supply required for the electronic tag to operate. A passive electronic tag generally transmits information to the reader/writer in a reflection modulation mode. A practical range of the passive tag is about 10 cm to a few meters. The passive tag has a light weight, a small volume, and a long service life. However, a transmit distance of the passive tag is limited, and the passive tag requires large transmit power of the reader/writer and low power consumption of a working circuit of a responder.

Optionally, the tag 102 and the tag 103 included in the tag positioning system provided in this application may be active tags, the tag 102 and the tag 103 may be passive tags, or the tag 102 and the tag 103 may be semi-active tags. This is not specifically limited herein.

In this application, an RFID system has other classification manners. Based on different modulation modes, tags may be further classified into an active mode, a passive mode, and a semi-active mode. Based on whether stored information is written, tags are classified into a read-only tag and a read-write tag. Based on different packaging forms, tags may be classed into a credit card tag, a linear tag, a paper tag, a glass tube tag, a round tag, and a special-purpose irregular-shaped tag. Tags in different classification manners are the same in the inventory process.

Based on the tag positioning system described in FIG. 4, a tag positioning method provided in this application is described.

FIG. 5 is a schematic diagram of an embodiment of a tag positioning method according to this application.

Refer to FIG. 5. The embodiment of the tag positioning method provided in this application includes step 201 to step 203.

201: A target tag receives first signaling sent by a target reader/writer, and correspondingly, the target reader/writer sends the first signaling to the target tag.

In this application, the target reader/writer includes a first transmitter and a first receiver, and the first signaling includes an identity ID of the first transmitter.

In this application, the target reader/writer uses a transmit/receive separation architecture. After being separated, the target reader/writer includes at least the first transmitter and the first receiver. Optionally, the target reader/writer may further include more transmitters such as a second transmitter. This is not specifically limited herein. The target reader/writer sends the first signaling to the target tag. Optionally, the first signaling may be inventory signaling, and the inventory signaling refers to signaling in an inventory process. Specifically, the inventory signaling may be selection signaling Select, query signaling Query, acknowledgment signaling ACK, negative acknowledgment signaling NAK, and/or query signaling Queryrep. This is not specifically limited herein.

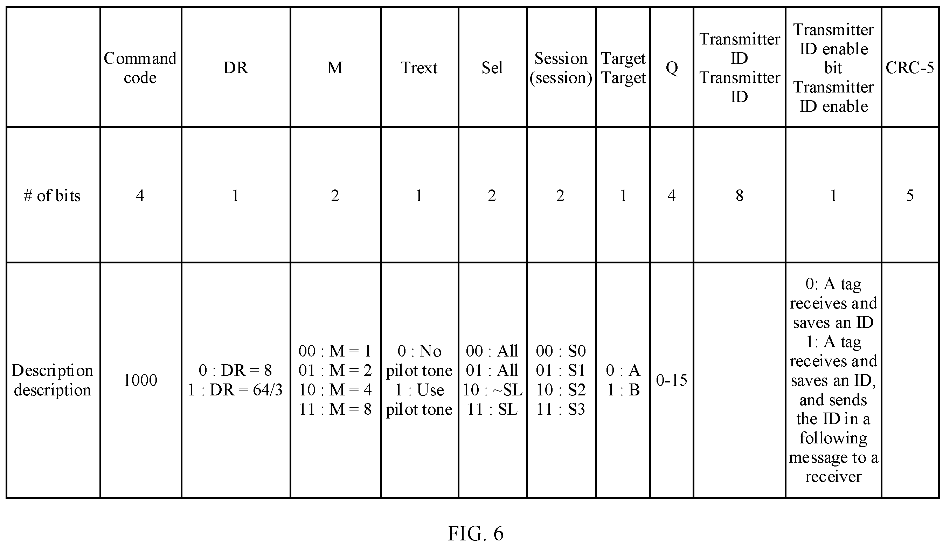

FIG. 6 is a schematic diagram of another embodiment of a tag positioning method according to this application.

In this application, an identity of a first transmitter may be embodied in a form of an ID. For example, as shown in FIG. 6, the ID of the first transmitter is allocated by a central control unit (interrogator receiver). The ID of the first transmitter is carried in Query signaling. Query shown in FIG. 6 includes a first transmitter identity (transmitter ID) field, and the transmitter ID field indicates the ID of the first transmitter. Optionally, Query may further include an enable bit for indicating whether a tag is sent to a receiver. The target reader/writer may determine, by configuring content in the enable bit, whether the target tag sends the ID of the first transmitter to the target reader/writer in a following piece of signaling.

Manner 1: A portion of the inventory signaling sent by the target reader/writer to the target tag carries the identity of the first transmitter.

In this application, when the target reader/writer inventories the target tag, the reader/writer first sends Select and Query to the tag to perform an inventory process. Optionally, the identity of the first transmitter may be carried in Select and/or Query, so that the tag may learn of the ID of the first transmitter when the inventory process starts, and adds the ID of the first transmitter to an RN 16 returned to the target reader/writer. Optionally, the identity of the first transmitter may also be carried in ACK, NAK, Queryrep, and/or Queryadjust. This is not specifically limited herein.

Manner 2: All inventory signaling sent by the target reader/writer to the target tag carries the identity of the first transmitter.

In this application, optionally, Select, Query, ACK, NAK, Queryrep, and/or Queryadjust that are sent by the target reader/writer to the target tag all carry the identity of the first transmitter.

In this application, if the first transmitter selected by the target reader/writer changes, the identity of the first transmitter also changes accordingly. The target tag reports a changed identity of the first transmitter to the target reader/writer through second signaling, so that the target reader/writer may learn that a location of the target tag changes, and may lock the location of the target tag more accurately. Optionally, the tag may be located in coverage areas of a plurality of transmitters. After the target reader/writer switches a transmitter, the identity of the first transmitter also changes accordingly. The target tag may narrow down a possible area in which the target tag is located by using the coverage areas of the plurality of transmitters, to more accurately locate the target tag.

202: The target tag sends the second signaling to the target reader/writer, and correspondingly, the target reader/writer receives the second signaling sent by the target tag.

In this application, the second signaling includes the ID of the first transmitter.

Optionally, the second signaling may be reply signaling Reply in the inventory process, the second signaling may be electronic product code EPC in the inventory process, or the second signaling may be other signaling. This is not specifically limited herein.

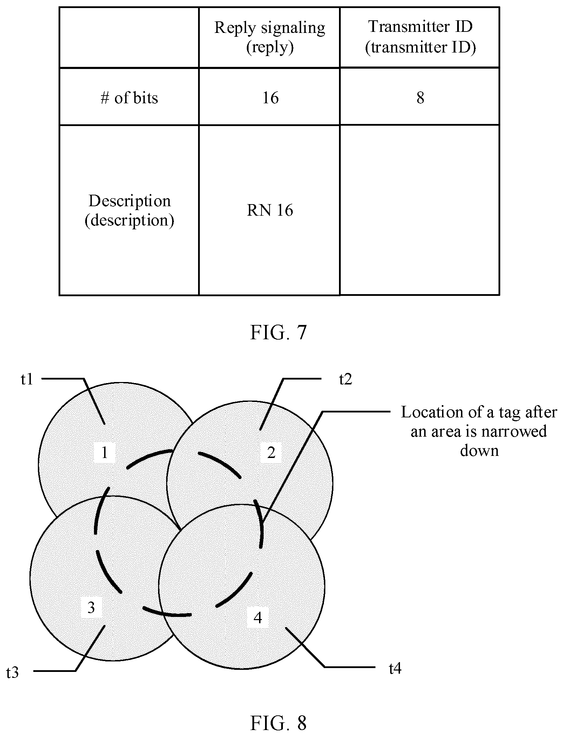

FIG. 7 is a schematic diagram of an embodiment of a tag positioning method according to this application.

Refer to FIG. 7. For example, it is assumed that a first transmitter identity (transmitter ID) field included in Reply that is replied by a tag to a target reader/writer includes an identity of the transmitter. An implementation in which Reply includes the identity of the transmitter is shown in FIG. 7.

203: The target reader/writer predicts a location of the target tag based on the ID of the first transmitter.

In this application, in different cases, the target reader/writer may predict the location of the target tag in different manners based on the ID that is of the first transmitter and that is reported by the target tag. The following example provides detailed description.

FIG. 8 is a schematic diagram of another embodiment of a tag positioning method according to this application.

### (1) A tag is in a static state.

As shown in FIG. 8, if the tag is in the static state, in different inventory cycles, a same tag may send inventory signaling through different transmitters in a process in which a reader/writer inventories the tag. It is assumed that the tag sends the inventory signaling through a transmitter whose ID is 1 at a moment t1, sends the inventory signaling through a transmitter whose ID is 2 at a moment t2, sends the inventory signaling through a transmitter whose ID is 3 at a moment t3, and sends the inventory signaling through a transmitter whose ID is 4 at a moment t4.

A receiver may predict a location of the tag by using the ID of the transmitter and a received signal strength indication (received signal strength indication, RSSI) for receiving the inventory signaling sent by the tag at different moments. In passive tag communication, the receiver may also estimate the RSSI of the inventory signaling from the inventory signaling returned by the tag. In a process of signaling transmission between the tag and the reader/writer, parameters such as a reverse link transmission loss and a tag energy loss basically remain unchanged. Therefore, RSSIs received by the receiver at different moments may be calculated by using the following formula: 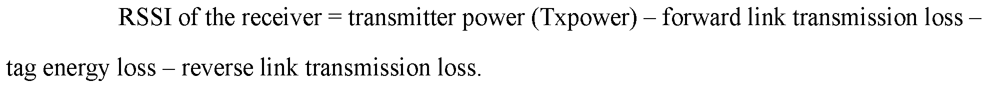 RSSI of the receiver = transmitter power (Txpower) - forward link transmission loss - tag energy loss - reverse link transmission loss.

It can be learned from the foregoing formula that an energy loss difference between forward link transmission losses when different transmitters are used to transmit the inventory signaling may be applied to a positioning technology, and a range of a location of the tag may be further determined by using the forward link transmission losses.

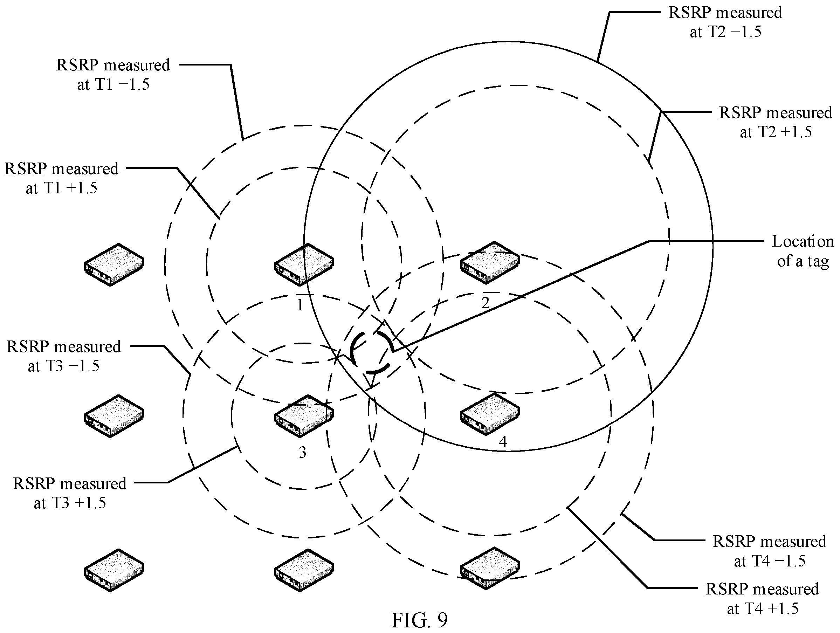

FIG. 9 is a schematic diagram of an embodiment of a tag positioning method according to this application.

For example, a coverage area of a transmitter may be divided by using reference signal received power (reference signal received power, RSRP) of the transmitter.

As shown in FIG. 9, for example, transmitters 1, 2, 3, and 4 are evenly distributed, and it is considered that each RSRP measurement has a deviation, where the deviation is ±1.5 dB. A final location of a tag is determined to be in an area enclosed by four focal points in the figure. The location of the tag is concentrated in an area about 434 square meters, and average positioning precision is about 20 m. If a reader/writer does not learn of an identity of a transmitter, it is assumed that only the transmitters 1, 2, 3, and 4 are available in an area, coverage areas of the four transmitters are about 180 x 180 square meters, and the positioning precision is about 180 m. The positioning precision is improved by 80%.

### (2) The tag is a moving state.

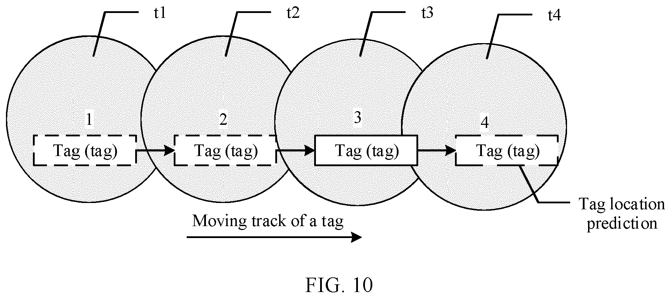

FIG. 10 is a schematic diagram of another embodiment of a tag positioning method according to this application.

As shown in FIG. 10, if the tag is in the moving state, t1, t2, t3, and t4 represent different inventory moments. 1, 2, 3, and 4 indicate transmitters with different IDs. A reader/writer may predict, by using an ID that is of a transmitter and that is in inventory signaling sent by the tag, that a moving track of the tag is 1-2-3. When the tag sends the inventory signaling through a transmitter whose ID is 3 at the moment t3, the reader/writer may predict that the tag is about to send, at t4, the inventory signaling through a transmitter whose ID is 4. To be specific, the reader/writer predicts that a location of the tag is about to be covered by the transmitter whose ID is 4 at t4.

In this application, in the tag positioning method provided in this application, in addition to performing step 201 to step 203, the target tag may further receive third signaling sent by the target reader/writer, where the third signaling indicates the target tag to send the second signaling. This specific implementation is described in the following method example.

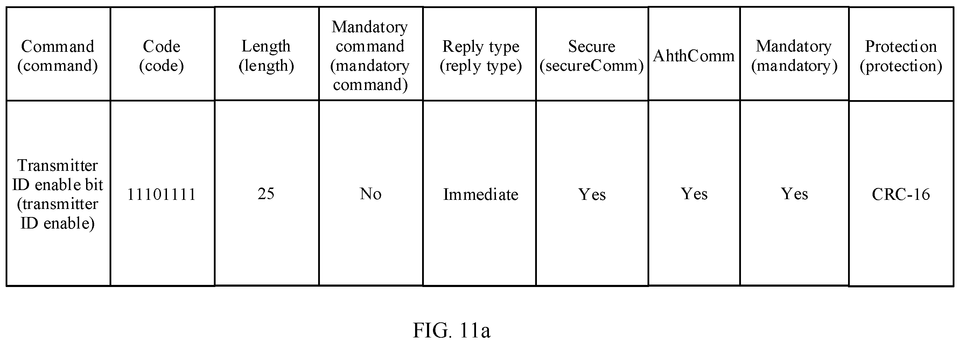

FIG. 11a is a schematic diagram of an embodiment of a tag positioning method according to this application.

In a possible implementation, a tag does not carry an identity of a transmitter in inventory signaling. After an inventory process ends, a target reader/writer sends an instruction to a target tag through third signaling, where the third signaling is dedicated signaling that indicates the target tag to send an identity of a first transmitter to the target reader/writer.

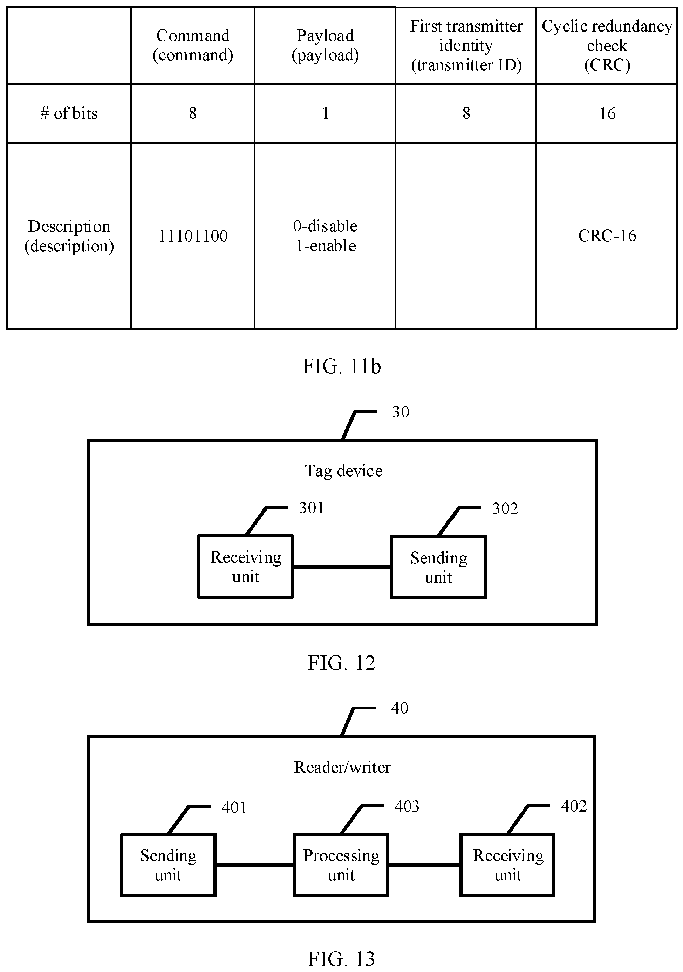

FIG. 11b is a schematic diagram of an embodiment of a tag positioning method according to this application.

For example, when a transmitter ID enable bit carried by a reader/writer in inventory signaling is disabled, the inventory signaling sent by a tag to the reader/writer does not include an identity of a transmitter. Therefore, the reader/writer may enable, through dedicated signaling after inventory, the tag to send, to the reader/writer, an identity of a transmitter of the reader/writer. The dedicated signaling is shown in FIG. 11a. When the tag receives the dedicated signaling, the tag may reply with response signaling for the dedicated signaling. The response signaling may also include an identity of a first transmitter. The response signaling is shown in FIG. 11b.

In this application, the target tag receives the first signaling sent by the target reader/writer, where the first signaling includes the identity ID of the first transmitter. The target tag sends the second signaling to the target reader/writer, where the second signaling includes the ID of the first transmitter. Further, the target reader/writer may determine, based on the ID that is of the first transmitter and that is included in the signaling sent by the target tag, a coverage area that is of a transmitter and in which the target tag is located, to more accurately determine a location of the tag. Therefore, efficiency of tag positioning is improved.

In the tag positioning method provided in this application, in addition to step 201 to step 203 included in the embodiment shown in FIG. 5, the target tag may further report fourth signaling to the target reader/writer after determining that a reporting condition is met. This specific implementation is described in detail in the following example.

If the target tag determines that the reporting condition is met, the target tag sends the fourth signaling to the target reader/writer.

In this application, optionally, the reporting condition of the tag may be sent by the reader/writer, or the reporting condition of the tag may be obtained in another manner. This is not specifically limited herein. Optionally, the reporting condition may be that the tag switches a transmitter, the reporting condition may be that preset reporting time of the tag is reached, or the reporting condition may be another condition. This is not specifically limited herein.

### (1) The tag switches a transmitter.

In this embodiment, the target reader/writer includes the first transmitter and a second transmitter, and the first transmitter and the second transmitter are not a same network device. The target tag communicates with the target reader/writer through the first transmitter. After the target tag moves, and it is assumed that the target tag goes beyond a coverage area of the first transmitter and enters a coverage area of the second transmitter, the target tag switches a transmitter and communicates with the target reader/writer through the second transmitter. Alternatively, coverage areas of the first transmitter and the second transmitter overlap, and the target tag switches from the first transmitter to the second transmitter. In this case, an identity that is of a transmitter and that is included in signaling sent by the target reader/writer and that is received by the target tag again is the identity of the second transmitter, and the target tag confirms that the received identity of the transmitter is switched from the identity of the first transmitter to the identity of the second transmitter. That is, the received identity of the transmitter changes. In this case, the target tag determines that the reporting condition is met, and the target tag may send the identity of the second transmitter to the target reader/writer through the fourth signaling. Optionally, the fourth signaling may be signaling included in the inventory signaling (such as Select, Query, Reply, ACK, NAK, EPC, Queryrep, and/or Queryadjust). Signaling included in the fourth signaling may also be signaling other than the inventory signaling. This is not specifically limited herein.

### (2) The preset reporting time of the tag reaches.

In this application, the first transmitter and the second transmitter are a same network device. After determining that the preset reporting time reaches, the target tag reports the identity of the second transmitter (the identity of the first transmitter) to a receiver of the reader/writer through the fourth signaling. Optionally, the preset reporting time may be obtained by skilled persons by configuring for the target tag through the target tag, and the preset reporting time may be sent by a receiver to the target tag through the inventory signaling or other signaling. The preset reporting time may also be obtained in another manner. The reader/writer may specify, through the first signaling, the target tag to report the identity of the first transmitter in specific signaling. This is not specifically limited herein.

In this application, optionally, the first signaling may further include reporting time of the identity of the first transmitter.

Optionally, the target reader/writer sends the reporting time of the identity of the first transmitter to the target tag through the first signaling. The reporting time may specify that the target tag sends the identity of the first transmitter to the target reader/writer at a specific moment, and the reporting time may specify that the target tag sends the identity of the first transmitter to the target reader/writer after a time period. For example, it is assumed that inventory signaling Select includes the reporting time, and the reporting time indicate the tag to carry an identity of a transmitter at a moment of sending EPC. The reader/writer sends Select that carries the reporting time to the tag, and after the tag receives Select, the tag carries the identity of the transmitter when sending the EPC. The reporting time may alternatively be that the target tag sends the identity of the first transmitter to the target reader/writer after receiving the third signaling mentioned in the foregoing embodiment. This is not specifically limited herein.

In this application, optionally, the first signaling may further include a quantity of reporting times of the identity of the first transmitter.

In this application, the target reader/writer may send, to the target tag through the first signaling, the quantity of reporting times of the identity of the first transmitter.

### (1) Report for one time or report in all signaling

For example, it is assumed that the quantity that is of reporting times and that is included in the first signaling indicates that the identity of the first transmitter is reported for one time. The reader/writer may specify, through the first signaling, the target tag to report the identity of the first transmitter in specific signaling. After the identity of the first transmitter is reported to the target reader/writer in the specific signaling, the identity of the first transmitter is no longer reported to the target reader/writer in other signaling than the specific signaling. It is assumed that the quantity that is of reporting times and that is included in the first signaling indicates to report the identity of the first transmitter in all signaling. The reader/writer may specify, through the first signaling, the target tag to report the identity of the first transmitter in all signaling that is sent to the reader/writer. The signaling mentioned in this embodiment may be signaling included in the inventory signaling, or may be signaling other than the inventory signaling. This is not specifically limited herein. In this application, signaling that is received by the target tag earlier than the first signaling may carry an identity of a transmitter used last time, or may carry an invalid identity. This is not specifically limited herein.

### (2) Random reporting

For example, in this application, it is assumed that the quantity that is of reporting times and that is included in the first signaling indicates random reporting, the identity that is of the first transmitter and that is sent by the target tag to the reader/writer may be included in any piece of signaling, and the target reader/writer may identify, in a plurality of manners, the signaling that carries the identity of the first transmitter.

Method 1: A flag bit identifies the signaling that carries the identity of the first transmitter.

For example, the flag bit may be added to the signaling sent by the target tag to the target reader/writer. It is assumed that a size of the flag bit is 1 bit, and 0 and 1 indicate whether the signaling carries the identity of the first transmitter. If the flag bit included in the signaling is 1, it indicates that the signaling carries the identity of the first transmitter. On the contrary, if the flag bit included in the signaling is 0, it indicates that the signaling does not carry the identity of the first transmitter. Optionally, if the flag bit is 0, it indicates that the signaling carries the identity of the first transmitter, and if the flag bit is 1, it indicates that the signaling does not carry the identity of the first transmitter. This is not specifically limited herein. In this application, a size of the flag bit may be 1 bit, may be 2 bits, or may be other sizes. This is not specifically limited herein.

Method 2: A preamble identifies the signaling that carries the identity of the first transmitter.

For example, if the signaling includes the identity of the first transmitter, a first-type preamble is used. If the signaling does not include the identity of the first transmitter, a second-type preamble is used. In this manner, a receiver needs to have a function of blindly detecting two types of preambles at the same time, and functions corresponding to different preambles may be preconfigured. A central processing unit may send a function corresponding to the guide header to the receiver and a transmitter, and the transmitter may send the function of the preamble to the tag through signaling in a broadcast mode. The signaling includes a specific flag bit, and the specific flag bit may indicate that the signaling is common signaling or dedicated signaling.

In this application, optionally, the identity of the first transmitter may be sent to the target reader/writer in a plaintext transmission manner. Optionally, the identity of the first transmitter is transmitted to the target reader/writer in an encrypted transmission manner. For example, the target tag may encrypt the identity of the first transmitter and an RN 16 in an exclusive OR manner, and then send the encrypted identity to the target reader/writer. Alternatively, the target tag may encrypt the identity of the first transmitter in another manner, and send the encrypted identity to the target reader/writer. This is not specifically limited.

Method 3: A specific ID identifies the signaling that carries the identity of the first transmitter.

In this application, if signaling sent by the tag to the reader/writer does not include an identity of a transmitter, the tag may scramble the signaling by using the specific ID, and the reader/writer can obtain the specific ID after descrambling the signaling, where the specific ID indicates that the signaling does not include the identity of the transmitter.

In this application, optionally, the specific ID may be preset in the tag, or the specific ID may be sent by a central control unit to a receiver and a transmitter. The transmitter sends the specific ID to the tag through signaling. The signaling includes a specific flag bit, and the specific flag bit indicates that the signaling sends a specific ID or an ID of a transmitter. This is not specifically limited herein.

In a process of encrypted transmission, the tag may further send the ID of the first transmitter to the reader/writer in an implicit transmission manner.

Optionally, in a possible implementation, if the signaling sent by the tag to the reader/writer includes an identity of a transmitter, the tag may scramble the signaling by using the identity of the transmitter, and the reader/writer may obtain the identity that is of the transmitter and that is sent by the tag after descrambling the signaling.

For example, when the tag receives Req-RN signaling sent by the transmitter, the tag scrambles an RN 16 by using the ID of the transmitter, and sends scrambled signaling to the reader/writer. The reader/writer may determine, by using whether the signaling can be descrambled, whether the identity of the transmitter matches, and obtain the ID of the transmitter after descrambling the signaling.

Optionally, in a possible implementation, to improve security, the RN 16 between the reader/writer and the tag is updated at intervals. The reader/writer sends Req_RN under an RFID protocol to the tag, and the tag obtains a new RN 16 after receiving Req_RN. In this application, optionally, a time-variant parameter is introduced. The tag may generate an encryption result after performing exclusive OR processing on the time-variant parameter, the original RN 16, and an ID of a transmitter, and the tag sends the encryption result to the reader/writer. If the reader/writer learns the original RN 16 and the time-variant parameter, the reader/writer may decrypt the encryption result again in an exclusive OR manner to obtain the ID of the transmitter.

In this application, there are a plurality of manners of generating the time-variant parameter. Optionally, the time-variant parameter may be generated by the tag, and after generating the time-variant parameter, the tag sends the time-variant parameter to the reader/writer through signaling. Optionally, the time-variant parameter may be generated by a transmitter. After generating the time-variant parameter, the transmitter separately sends the time-variant parameter to the tag and a receiver. Optionally, the time-variant parameter may be generated in another manner. This is not specifically limited herein.

For example, it is assumed that an identity of a transmitter has 16 bits. A= {A0, A1, ..., A16}, and A represents the identity of the transmitter. B = {B0, B1, ..., B16}, and B represent the original RN 16. T = {T0, T1, ..., T16}, and T represents the time-variant parameter. After the tag performs exclusive OR processing on A, B, and T, the tag sends an obtained result C to the reader/writer through signaling. After the reader/writer receives the signaling, since B and T are known to the reader/writer, the reader/writer may perform exclusive OR processing on C, B, and T to obtain A.

In this application, optionally, the target reader/writer obtains first configuration information through the first receiver.

The first configuration information may indicate a location of a third transmitter and/or a deployment relationship between a plurality of third transmitters, and the first configuration information further includes an ID of the third transmitter. The third transmitter refers to a transmitter in a subset of all transmitters communicating with the first receiver, and the third transmitter may include the first transmitter. Optionally, the first receiver may obtain the first configuration information through a network device such as a database or a server that stores a topological relationship. Alternatively, the first receiver may receive the first configuration information sent by one or more third transmitters. Alternatively, the first receiver may obtain the first configuration information in another manner. This is not specifically limited herein.

In this application, optionally, the target reader/writer may further send second configuration information to the transmitter through the receiver.

The second configuration information indicates a configuration required for communication between the target tag and the target reader/writer. It is assumed that the tag communicates with the reader/writer through a transmitter A. If the tag moves, after the reader/writer predicts a moving track of the tag, the reader/writer may infer that the tag communicates with the reader/writer through a transmitter B at a next moment. The reader/writer may send the second configuration information to the transmitter B. For example, the reader/writer may add a mask (mask) (the second configuration information) to the selection signaling Select sent to the transmitter B, to accelerate an inventory speed of the tag by the reader/writer and improve inventory efficiency. Optionally, the second configuration information may further include other content. This is not specifically limited herein.

The foregoing examples provide different implementations of a tag inventory method. The following provides a tag device 30. As shown in FIG. 12, the tag device 30 is configured to perform steps performed by the target tag in the foregoing examples. For specific understanding of execution steps and corresponding beneficial effects, refer to the foregoing corresponding examples. Details are not described herein again. The tag device 30 includes:
a receiving unit 301, configured to receive first signaling sent by a target reader/writer, where the target reader/writer includes a first transmitter and a first receiver, and the first signaling includes an identity of the first transmitter; and
a sending unit 302, configured to send second signaling to the target reader/writer, where the second signaling includes the identity of the first transmitter.

In a possible implementation, the first signaling includes inventory signaling, and the inventory signaling includes selection signaling Select, query signaling Query, acknowledgment signaling ACK, negative acknowledgment signaling NAK, and/or query signaling Queryrep.

In a possible implementation, the second signaling includes the inventory signaling, and the inventory signaling includes reply signaling Reply and/or electronic product code EPC.

In a possible implementation,
the receiving unit 301 is further configured to receive third signaling sent by the target reader/writer, where the third signaling indicates the target tag to send the second signaling to the target reader/writer.

In a possible implementation,
the processing unit is further configured to determine whether a reporting condition is met.

The sending unit 302 is further configured to send fourth signaling to the target reader/writer, where the fourth signaling includes an identity of a second transmitter.

In a possible implementation, the first signaling includes reporting time of the identity of the first transmitter.

In a possible implementation, the first signaling includes a quantity of reporting times of the identity of the first transmitter.

In a possible implementation, the identity of the first transmitter is transmitted in plaintext, or the identity of the first transmitter is transmitted in encrypted transmission.

It should be noted that content such as information interaction between the modules of the tag device 30 and execution processes thereof is based on a same idea as the method examples in this application, and execution steps of the tag device 30 are consistent with detailed content of the foregoing method steps. For details, refer to descriptions in the foregoing method examples.

The foregoing examples provide different implementations of the tag device 30. The following provides a reader/writer 40. As shown in FIG. 13, the reader/writer 40 is configured to perform steps performed by the target reader/writer in the foregoing examples. For specific understanding of execution steps and corresponding beneficial effects, refer to the foregoing corresponding examples. Details are not described herein again. The reader/writer 40 includes:
a sending unit 401, configured to send first signaling to a target tag, where the target reader/writer includes a first transmitter and a first receiver, and the first signaling includes an identity of the first transmitter;
a receiving unit 402, configured to receive second signaling sent by the target tag, where the second signaling includes the identity of the first transmitter; and
a processing unit 403, configured to predict a location of the target tag based on the identity of the first transmitter.

In a possible implementation,
the first signaling includes inventory signaling, and the inventory signaling includes selection signaling Select, query signaling Query, acknowledgment signaling ACK, negative acknowledgment signaling NAK, and/or query signaling Queryrep.

In a possible implementation,
the second signaling includes the inventory signaling, and the inventory signaling includes reply signaling Reply and/or electronic product code EPC.

In a possible implementation,
the sending unit 401 is further configured to send third signaling to the target tag, where the third signaling indicates the target tag to send the second signaling to the target reader/writer.

In a possible implementation, the reader/writer includes a third transmitter; and
the receiving unit 402 is further configured to obtain first configuration information through the first receiver, where the first configuration information indicates a location of the third transmitter and/or a deployment relationship between a plurality of third transmitters.

In a possible implementation,
the sending unit 401 further sends second configuration information to the transmitter through the receiver, where the second configuration information indicates a configuration required for communication between the target tag and the target reader/writer.

It should be noted that content such as information interaction between the modules of the reader/writer 40 and execution processes thereof is based on a same idea as the method examples in this application, and execution steps of the reader/writer 40 are consistent with detailed content of the foregoing method steps. For details, refer to descriptions in the foregoing method examples.

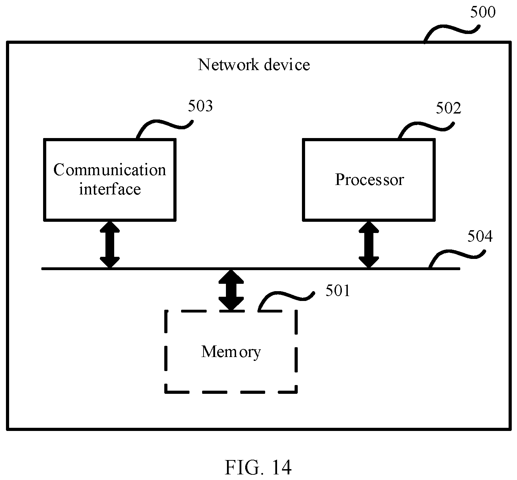

FIG. 14 is a schematic diagram of a structure of a network device 500 according to this application. The network device may be a tag device, or the network device may be a reader/writer. This is not specifically limited herein. The network device 500 includes a processor 502, a communication interface 503, and a memory 501. Optionally, the network device 500 may include a bus 504. The communication interface 503, the processor 502, and the memory 501 may be connected to each other through the bus 504. The bus 504 may be a peripheral component interconnect (Peripheral Component Interconnect, PCI) bus, an extended industry standard architecture (extended industry standard architecture, EISA) bus, or the like. The bus may be classified into an address bus, a data bus, a control bus, and the like. For ease of representation, only one bold line represents the bus in FIG. 14, but this does not mean that there is only one bus or only one type of bus. The network device 500 may implement a function of the tag device in FIG. 12, or the network device 500 may implement a function of the reader/writer in the example shown in FIG. 13. The processor 502 and the communication interface 503 may perform corresponding operations of the tag device or the reader/writer in the foregoing method examples.

The following specifically describes the components of the network device with reference to FIG. 14.

The memory 501 may be a volatile memory (volatile memory) such as a random access memory (random-access memory, RAM); or a non-volatile memory (non-volatile memory), for example, a read-only memory (read-only memory, ROM), a flash memory (flash memory), a hard disk drive (hard disk drive, HDD), or a solid-state drive (solid-state drive, SSD); or a combination of the foregoing types of memories, configured to store program code, a configuration file, or other content for implementing the method in this application.

The processor 502 is a control center of a controller, and may be a central processing unit (central processing unit, CPU), or may be an application-specific integrated circuit (application specific integrated circuit, ASIC), or one or more integrated circuits configured to implement the examples provided in this application, for example, one or more digital signal processors (digital signal processor, DSP), or one or more field programmable gate arrays (field programmable gate array, FPGA).

The communication interface 503 is configured to communicate with another network device.

The processor 502 may perform an operation performed by the tag device in the example shown in FIG. 12, or an operation performed by the reader/writer in the example shown in FIG. 13. Details are not described herein again.

It should be noted that content such as information interaction between the modules of the network device 500 and execution processes thereof is based on a same idea as the method example in this application, and execution steps of the network device 500 are consistent with detailed content of the foregoing method steps. For details, refer to descriptions in the foregoing method example.

It may be clearly understood by a person skilled in the art that, for the purpose of convenient and brief description, for a detailed working process of the foregoing system, apparatus, and unit, refer to a corresponding process in the foregoing examples. Details are not described herein again.

In the several examples provided in this application, it should be understood that the disclosed system, apparatus, and method may be implemented in other manners. For example, the described apparatus example is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one location, or may be distributed on a plurality of network units. Some or all of the units may be selected according to an actual requirement to achieve the objective of this example.

In addition, functional units in the examples of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or a part that contributes to the conventional technology, or all or a part of the technical solutions may be implemented in a form of a software product. The computer software product is stored in a storage medium and includes several instructions for instructing a computer device (which may be a personal computer, a server, a network device, or the like) to perform all or some steps of the methods in the examples of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A radio frequency identification, RFID, tag positioning method, comprising:
receiving (201), by a target tag (102), first signaling sent by a target reader/writer (101), wherein the target reader/writer (101) comprises a first transmitter (105) and a first receiver (104), and the first signaling comprises an identity of the first transmitter (105); and
sending (202), by the target tag (102), second signaling to the target reader/writer (101), wherein the second signaling comprises the identity of the first transmitter (105).

2. The RFID tag positioning method according to claim 1, wherein the first signaling comprises inventory signaling, and the inventory signaling comprises selection signaling Select, query signaling Query, acknowledgment signaling, ACK, negative acknowledgment signaling, NAK, and/or query signaling Queryrep.

3. The RFID tag positioning method according to claim 1 or 2, wherein the second signaling comprises the inventory signaling, and the inventory signaling comprises reply signaling Reply and/or electronic product code, EPC.

4. The RFID tag positioning method according to any one of claims 1 to 3, wherein the first signaling comprises reporting time of the identity of the first transmitter (105).

5. The RFID tag positioning method according to any one of claims 1 to 4, wherein the first signaling comprises a quantity of reporting times of the identity of the first transmitter (105).

6. The RFID tag positioning method according to any one of claims 1 to 5, wherein the identity of the first transmitter (105) is transmitted in plaintext, or the identity of the first transmitter (105) is transmitted in encrypted transmission.

7. A radio frequency identification, RFID, tag positioning method, comprising:
sending, by a target reader/writer (101), first signaling to a target tag (102), wherein the target reader/writer (101) comprises a first transmitter (105) and a first receiver (104), and the first signaling comprises an identity of the first transmitter (105);
receiving, by the target reader/writer (101), second signaling sent by the target tag (102), wherein the second signaling comprises the identity of the first transmitter (105); and
predicting (203), by the target reader/writer (101), a location of the target tag (102) based on the identity of the first transmitter (105), wherein the predicting comprises determining, based on the identity of the first transmitter (105) comprised by the second signaling, a coverage area of the first transmitter in which the target tag (102) is located.

8. The RFID tag positioning method according to claim 7, wherein the first signaling comprises inventory signaling, and the inventory signaling comprises selection signaling Select, query signaling Query, acknowledgment signaling, ACK, negative acknowledgment signaling, NAK, and/or query signaling Queryrep.

9. The RFID tag positioning method according to claim 7 or 8, wherein the second signaling comprises the inventory signaling, and the inventory signaling comprises reply signaling Reply and/or electronic product code, EPC.

10. The RFID tag positioning method according to any one of claims 7 to 9, wherein the target reader/writer (101) comprises a third transmitter, and the method further comprises:
obtaining, by the target reader/writer (101), first configuration information through the first receiver (104), wherein the first configuration information indicates a location of the third transmitter and/or a deployment relationship between a plurality of third transmitters.

11. The RFID tag positioning method according to any one of claims 7 to 10, wherein the method further comprises:
sending, by the target reader/writer (101), second configuration information to the transmitter through the receiver, wherein the second configuration information indicates a configuration required for communication between the target tag (102) and the target reader/writer (101).

12. A radio frequency identification, RFID, reader/writer (101) comprising:
a processor (502), a memory (501), and a communication interface (503), wherein
the processor is connected to the memory and the communication interface;
the processor is configured to: after reading instructions stored in the memory, enable the reader/writer to perform the method according to any one of claims 7 to 10.

13. The RFID reader/writer according to claim 12, wherein the processor is configured to read instructions to perform the method according to any one of claims 7 to 10.

14. A network system, comprising a target tag (102) comprised in the tag positioning method according to any one of claims 1 to 6 and a target reader/writer (101) comprised in the tag positioning method according to any one of claims 7 to 10.

## Patentansprüche

1. Verfahren zum Positionieren eines Radiofrequenz-Identifikations(RFID)-Tags, das umfasst:
Empfangen (201), durch ein Ziel-Tag (102), einer ersten Signalisierung, die durch ein Ziel-Lese-/Schreibgerät (101) gesendet wird, wobei das Ziel-Lese-/Schreibgerät (101) eine erste Übertragungseinrichtung (105) und einen ersten Empfänger (104) umfasst, und die erste Signalisierung eine Identität der ersten Übertragungseinrichtung (105) umfasst; und
Senden (202), durch das Ziel-Tag (102), einer zweiten Signalisierung an das Ziel-Lese-/Schreibgerät (101), wobei die zweite Signalisierung die Identität der ersten Übertragungseinrichtung (105) umfasst.

2. RFID-Tag-Positionierungsverfahren nach Anspruch 1, wobei die erste Signalisierung Inventarsignalisierung umfasst, und die Inventarsignalisierung Auswahlsignalisierung Select, Abfragesignalisierung Query, Bestätigungssignalisierung, ACK, negative Bestätigungssignalisierung, NAK, und/oder Abfragesignalisierung Queryrep umfasst.

3. RFID-Tag-Positionierungsverfahren nach Anspruch 1 oder 2, wobei die zweite Signalisierung die Inventarsignalisierung umfasst und die Inventarsignalisierung Antwortsignalisierung Reply und/oder elektronischen Produktcode, EPC, umfasst.

4. RFID-Tag-Positionierungsverfahren nach einem der Ansprüche 1 bis 3, wobei die erste Signalisierung eine Meldezeit der Identität der ersten Übertragungseinrichtung (105) umfasst.

5. RFID-Tag-Positionierungsverfahren nach einem der Ansprüche 1 bis 4, wobei die erste Signalisierung eine Anzahl von Meldezeiten der Identität der ersten Übertragungseinrichtung (105) umfasst.

6. RFID-Tag-Positionierungsverfahren nach einem der Ansprüche 1 bis 5, wobei die Identität der ersten Übertragungseinrichtung (105) in Klartext übertragen wird oder die Identität der ersten Übertragungseinrichtung (105) in verschlüsselter Übertragung übertragen wird.

7. Verfahren zum Positionieren eines Radiofrequenz-Identifikations(RFID)-Tags, das umfasst:
Senden, durch ein Ziel-Lese-/Schreibgerät (101), einer ersten Signalisierung an ein Ziel-Tag (102), wobei das Ziel-Lese-/Schreibgerät (101) einer erste Übertragungseinrichtung (105) und einen ersten Empfänger (104) umfasst, und die erste Signalisierung eine Identität der ersten Übertragungseinrichtung (105) umfasst;
Empfangen, durch das Ziel-Lese-/Schreibgerät (101), einer zweiten Signalisierung, die durch das Ziel-Tag (102) gesendet wird, wobei die zweite Signalisierung die Identität der ersten Übertragungseinrichtung (105) umfasst; und
Vorhersagen (203), durch das Ziel-Lese-/Schreibgerät (101), eines Standorts des Ziel-Tags (102) basierend auf der Identität der ersten Übertragungseinrichtung (105),
wobei das Vorhersagen ein Bestimmen, basierend auf der Identität der ersten Übertragungseinrichtung (105), die durch die zweite Signalisierung umfasst ist, eines Abdeckungsbereichs der ersten Übertragungseinrichtung, in dem das Ziel-Tag (102) ist, umfasst.

8. RFID-Tag-Positionierungsverfahren nach Anspruch 7, wobei die erste Signalisierung Inventarsignalisierung umfasst, und die Inventarsignalisierung Auswahlsignalisierung Select, Abfragesignalisierung Query, Bestätigungssignalisierung, ACK, negative Bestätigungssignalisierung, NAK, und/oder Abfragesignalisierung Queryrep umfasst.

9. RFID-Tag-Positionierungsverfahren nach Anspruch 7 oder 8, wobei die zweite Signalisierung die Inventarsignalisierung umfasst und die Inventarsignalisierung Antwortsignalisierung Reply und/oder elektronischen Produktcode, EPC, umfasst.

10. RFID-Tag-Positionierungsverfahren nach einem der Ansprüche 7 bis 9, wobei das Ziel-Lese-/Schreibgerät (101) ferner eine dritte Übertragungseinrichtung umfasst und das Verfahren ferner umfasst:
Erhalten, durch das Ziel-Lese-/Schreibgerät (101), von ersten Konfigurationsinformationen durch den ersten Empfänger (104), wobei die ersten Konfigurationsinformationen einen Standort der dritten Übertragungseinrichtung und/oder eine Anordnungsbeziehung zwischen einer Vielzahl von dritten Übertragungseinrichtungen angibt.

11. RFID-Tag-Positionierungsverfahren nach einem der Ansprüche 7 bis 10, wobei das Verfahren ferner umfasst:
Senden, durch das Ziel-Lese-/Schreibgerät (101), von zweiten Konfigurationsinformationen an die Übertragungseinrichtung durch den Empfänger, wobei die zweiten Konfigurationsinformationen eine Konfiguration, die für eine Kommunikation zwischen dem Ziel-Tag (102) und dem Ziel-Lese-/Schreibgerät (101) erforderlich ist, angeben.

12. Lese-/Schreibgerät (101) für ein Radiofrequenz-Identifikations(RFID)-Tag, das umfasst:
einen Prozessor (502), einen Speicher (501) und eine Kommunikationsschnittstelle (503), wobei
der Prozessor mit dem Speicher und der Kommunikationsschnittstelle verbunden ist;
der Prozessor konfiguriert ist zum: nachdem Anweisungen, die in dem Speichert gespeichert sind, gelesen werden, Aktivieren des Lese-/Schreibgeräts, um das Verfahren nach einem der Ansprüche 7 bis 10 durchzuführen.

13. RFID-Lese-/Schreibgerät nach Anspruch 12, wobei der Prozessor konfiguriert ist, um Anweisungen zu lesen, um das Verfahren nach einem der Ansprüche 7 bis 10 durchzuführen.

14. Netzwerksystem, das ein Ziel-Tag (102), das in dem Tag-Positionierungsverfahren nach einem der Ansprüche 1 bis 6 umfasst ist, und ein Ziel-Lese-/Schreibgerät (101), das in dem Tag-Positionierungsverfahren nach einem der Ansprüche 7 bis 10 umfasst ist, umfasst.

## Revendications

1. Procédé de positionnement d'étiquette d'identification par radiofréquence, RFID, comprenant :
la réception (201), par une étiquette cible (102), d'une première signalisation envoyée par un dispositif de lecture/écriture cible (101), dans lequel le dispositif de lecture/écriture cible (101) comprend un premier transmetteur (105) et un premier récepteur (104), et la première signalisation comprend une identité du premier transmetteur (105) ; et
l'envoi (202), par l'étiquette cible (102), d'une seconde signalisation au dispositif de lecture/écriture cible (101), dans lequel la seconde signalisation comprend l'identité du premier transmetteur (105).

2. Procédé de positionnement d'étiquette RFID selon la revendication 1, dans lequel la première signalisation comprend une signalisation d'inventaire, et la signalisation d'inventaire comprend une signalisation de sélection Select, une signalisation de requête Query, une signalisation d'accusé de réception, ACK, une signalisation d'accusé de réception négatif, NAK, et/ou une signalisation de requête Queryrep.

3. Procédé de positionnement d'étiquette RFID selon la revendication 1 ou 2, dans lequel la seconde signalisation comprend la signalisation d'inventaire, et la signalisation d'inventaire comprend une signalisation de réponse Reply et/ou un code de produit électronique, EPC.

4. Procédé de positionnement d'étiquette RFID selon l'une quelconque des revendications 1 à 3, dans lequel la première signalisation comprend un moment de rapport de l'identité du premier transmetteur (105).

5. Procédé de positionnement d'étiquette RFID selon l'une quelconque des revendications 1 à 4, dans lequel la première signalisation comprend une quantité de moments de rapport de l'identité du premier transmetteur (105).

6. Procédé de positionnement d'étiquette RFID selon l'une quelconque des revendications 1 à 5, dans lequel l'identité du premier transmetteur (105) est transmise en texte brut, ou l'identité du premier transmetteur (105) est transmise en transmission cryptée.

7. Procédé de positionnement d'étiquette d'identification par radiofréquence, RFID, comprenant :
l'envoi, par un dispositif de lecture/écriture cible (101), d'une première signalisation à une étiquette cible (102), dans lequel le dispositif de lecture/écriture cible (101) comprend un premier transmetteur (105) et un premier récepteur (104), et la première signalisation comprend une identité du premier transmetteur (105) ;
la réception, par le dispositif de lecture/écriture cible (101), d'une seconde signalisation envoyée par l'étiquette cible (102), dans lequel la seconde signalisation comprend l'identité du premier transmetteur (105) ; et
la prédiction (203), par le dispositif de lecture/écriture cible (101), d'un emplacement de l'étiquette cible (102) en fonction de l'identité du premier transmetteur (105), dans lequel la prédiction comprend la détermination, en fonction de l'identité du premier transmetteur (105) comprise par la seconde signalisation, d'une zone de couverture du premier transmetteur dans laquelle l'étiquette cible (102) est située.

8. Procédé de positionnement d'étiquette RFID selon la revendication 7, dans lequel la première signalisation comprend une signalisation d'inventaire, et la signalisation d'inventaire comprend une signalisation de sélection Select, une signalisation de requête Query, une signalisation d'accusé de réception, ACK, une signalisation d'accusé de réception négatif, NAK, et/ou une signalisation de requête Queryrep.

9. Procédé de positionnement d'étiquette RFID selon la revendication 7 ou 8, dans lequel la seconde signalisation comprend la signalisation d'inventaire, et la signalisation d'inventaire comprend une signalisation de réponse Reply et/ou un code de produit électronique, EPC.

10. Procédé de positionnement d'étiquette RFID selon l'une quelconque des revendications 7 à 9, dans lequel le dispositif de lecture/écriture cible (101) comprend un troisième transmetteur, et le procédé comprend en outre :
l'obtention, par le dispositif de lecture/écriture cible (101), de premières informations de configuration par l'intermédiaire du premier récepteur (104), dans lequel les premières informations de configuration indiquent un emplacement du troisième transmetteur et/ou une relation de déploiement entre une pluralité de troisièmes transmetteurs.

11. Procédé de positionnement d'étiquette RFID selon l'une quelconque des revendications 7 à 10, dans lequel le procédé comprend en outre :
l'envoi, par le dispositif de lecture/écriture cible (101), de secondes informations de configuration au transmetteur par l'intermédiaire du récepteur, dans lequel les secondes informations de configuration indiquent une configuration requise pour une communication entre l'étiquette cible (102) et le dispositif de lecture/écriture cible (101).

12. Dispositif de lecture/écriture d'identification par radiofréquence, RFID (101), comprenant :
un processeur (502), une mémoire (501), et une interface de communication (503), dans lequel
le processeur est connecté à la mémoire et à l'interface de communication ;
le processeur est configuré pour : après la lecture d'instructions stockées dans la mémoire, permettre au dispositif de lecture/écriture d'effectuer le procédé selon l'une quelconque des revendications 7 à 10.

13. Dispositif de lecture/écriture RFID selon la revendication 12, dans lequel le processeur est configuré pour lire des instructions pour effectuer le procédé selon l'une quelconque des revendications 7 à 10.

14. Système de réseau, comprenant une étiquette cible (102) comprise dans le procédé de positionnement d'étiquette selon l'une quelconque des revendications 1 à 6 et un dispositif de lecture/écriture cible (101) compris dans le procédé de positionnement d'étiquette selon l'une quelconque des revendications 7 à 10.
